# EUROPEAN PATENT SPECIFICATION

(11) **EP 0 831 267 B1**
(45) Date of publication and mention of the grant of the patent: **14.06.2000**
(21) Application number: 97830431.9
(22) Date of filing: 29.08.1997
(51) Int. Cl.: F16L 27/107, F16L 27/08, E03C 1/04

(54) **Flexible hose construction for fluid couplings**
Flexible Schlauchkonstruktion für Fluidkupplungen
Construction de tuyaux flexibles pour raccords pour fluides

(30) Priority: 18.09.1996 IT MI960621 U
(43) Date of publication of application: 25.03.1998
(73) Proprietor: Parigi, Cesare, 20052 Monza (Milano) (IT)
(72) Inventor: Parigi, Cesare, 20052 Monza (Milano) (IT)
(74) Representative: Cicogna, Franco

(56) References cited:
- EP-A- 0 681 127
- DE-U- 8 703 606
- FR-A- 2 513 347
- US-A- 3 017 203
- US-A- 4 159 027

## Description

### BACKGROUND OF THE INVENTION

The present invention relates to a flexible hose construction for hydraulic fittings and for fluid couplings in general.

As is known, prior commercially available flexible hoses usually comprise a flexible pipe length, which, at an end thereof, is coupled to a fixed male fitting whereas, at the other end thereof, is coupled to a female fitting, in which an outer female ring-nut is provided, for clamping a flexible hose, so as to lock said flexible hose, with respect to a wall fitting, or with respect to a connecting element to which it is coupled.

With the disclosed prior approach, as the flexible hose is subjected to possible displacements, then these displacements will generate twisting efforts or stresses on said flexible hose, and the latter can be easily damaged.

The above mentioned drawback will prevent the flexible hose to be used in a broad application range and, accordingly, prior flexible hoses are mainly applied in fixed systems, that is for coupling to a cock fixed to a sanitary article.

A flexible hose construction according to the preamble of claim 1 is known from US-A-4,159,027.

### SUMMARY OF THE INVENTION

Accordingly, the aim of the present invention is to overcome the above mentioned drawbacks, by providing a flexible hose construction for hydraulic fittings and for fluid couplings in general, which allows to perform an easy and quick connection even of elements which can be subjected to mutual displacements, without transmitting to the flexible hose any twisting stress.

Within the scope of the above mentioned aim, a main object of the present invention is to provide such a flexible hose construction which can be applied in a easy and quick manner either to cock elements, provided for wall connection or for a basin type of connection, and which, moreover, can be also used in the so-called phone shower assemblies, or with pipes for gas supplying gas kitchens, ovens or the like.

Yet another object of the present invention is to provide such a flexible hose construction which, owing to its specifically designed constructional features, is very reliable and safe in operation.

Yet another object of the present invention is to provide such a flexible hose construction, for hydraulic fittings in general, which can be easily made starting from easily available elements and materials and which, moreover, is very competitive from a mere economic standpoint.

In accordance with the invention, there is provided a flexible hose construction for hydraulic fittings and for fluid couplings in general, which comprises an inner tubular element, arranged inside an outer sheath and coupled, at one end thereof, to a fixed male fitting and, at the other end thereof, to a female fitting. The flexible hose construction is characterized in that the female fitting is fluidly sealed and adapted to turn with respect to a rotary axis of the inner tubular element, and the female fitting comprises a ring-nut having a shell which at one end is provided with an inner thread and which at another end is provided with an inner cylindrical surface, and the female fitting is provided with an end-piece to be coupled to the inner tubular element and defining, at the other end portion thereof, a plurality of ring-like slots each receiving a sealing annular gasket for abutting against and sealing the shell inner cylindrical surface which extends sufficiently away from the inner thread for abutting against the sealing annular gaskets in the plurality of ring-like slots.

### BRIEF DESCRIPTION OF THE DRAWINGS

The characteristics and advantages of the present invention will become more apparent hereinafter from the following detailed disclosure of a preferred, though not exclusive, embodiment of a flexible hose construction for hydraulic fittings and for fluid couplings in general according to the invention which is illustrated, by way of an indicative, but not limitative example, in the figures of the accompanying drawings, where:
Figure 1 is a schematic partially broken-away view illustrating the flexible hose construction according to the invention;
Figure 2 is a partial cross-sectional view illustrating a female fitting associated with said flexible hose construction;
   and
Figure 3 illustrates several flexible hoses according to the present invention, as applied to a cock or faucet assembly.

### DESCRIPTION OF THE PREFERRED EMBODIMENT

With reference to the number references of the above mentioned figures, the flexible hose construction for hydraulic fittings and for fluid couplings in general according to the present invention, which has been generally indicated by the reference number 1, comprises an inner tubular element 2, made of a rubber material, and which is arranged inside an outer sheath 3, which, for example, can be constituted by a knitted assembly of metal wires, or any other containment elements.

At one end thereof, the inner tubular element is coupled to a fixed male fitting 4, which is made rigid by crashing and clamping a socket element 5 arranged at the end of said tubular element and about the end-piece of the fitting 4.

The main feature of the present invention is that, at the other end of said inner tubular element is provided a female fitting 10, which can turn about a rotary axis defined by said tubular element.

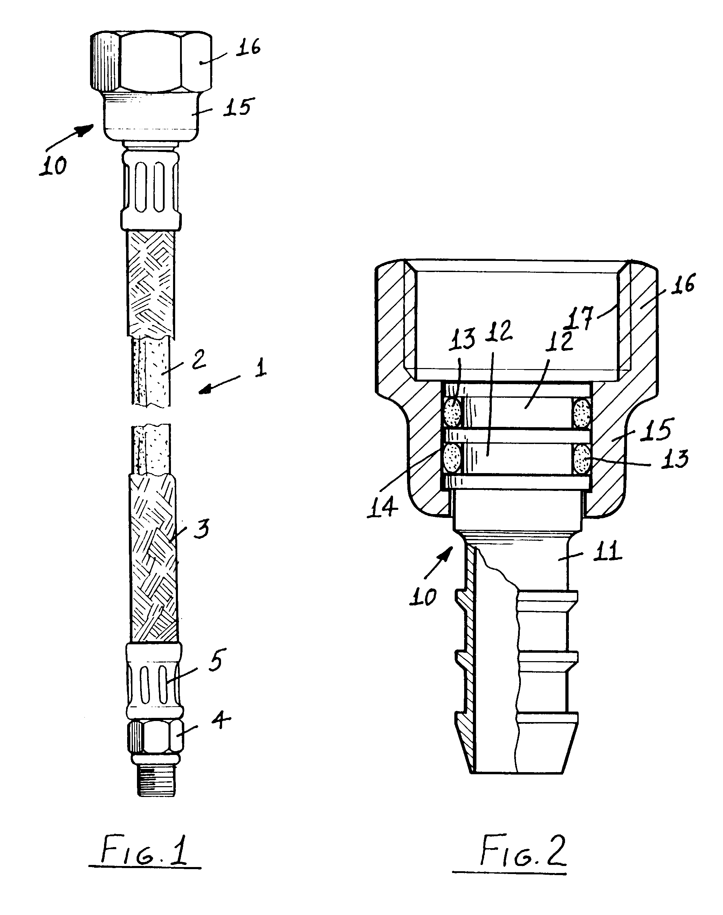

More specifically, the female fitting 10, as shown in figure 2, is provided with a connection end-piece 11 to be engaged inside said tubular element 2 and being provided, at the other end thereof, with ring-like slots 2, for receiving annular gaskets 13 for sealing the inner cylindric hollow 14 of the shell 15 of a female ring-nut 16 defining in its inside a female thread 17.

In particular, the ring-nut 16 can be freely turned with respect to the fitting end-piece 11. Thus, any possible displacements or strains transmitted to the flexible tubular element will not generate any twisting efforts, owing to the disclosed free turning possibility.

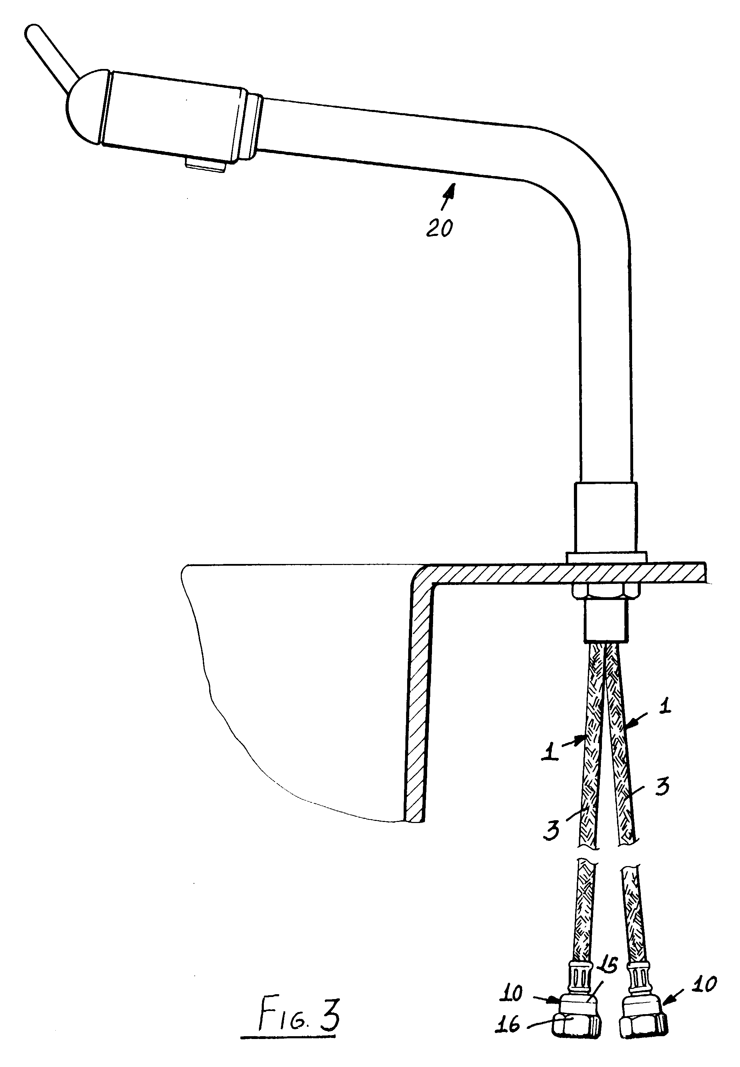

Thus, the disclosed coupling would be specifically suitable for making flexible hoses to be used, for example, in tubular faucets 20, shown in figure 3, or in any other hydraulic system in which the hydraulic element connected by said flexible hose 1 can be subjected to a displacement which, owing to the mentioned free rotation capability, would not stress with twisting efforts the flexible element thereby preventing said flexible element from being damaged.

From the above disclosure it should be apparent that the invention fully achieves the intended aim and objcts.

In particular, the fact is to be pointed out that a novel flexible hose construction has been provided, in which the female fitting element, even as it is clamped against the element to which must be coupled, will provide a free rotary capability, of a sealed type, for the tubular element.

In practicing the invention, the used materials, provided that they are compatible to the intended application, as well as the contingent size and shapes, can be any, depending on requirements.

## Claims

1. A flexible hose construction (1) for hydraulic fittings and for fluid couplings in general, comprising an inner tubular element (2), arranged inside an outer sheath (3) and coupled, at one end thereof, to a fixed male fitting (4) and, at the other end thereof, to a female fitting (10), characterized in that said female fitting is fluidly sealed and adapted to turn with respect to a rotary axis of said inner tubular element (2), said female fitting comprising a ring-nut (16) having a shell (15) which at one end is provided with an inner thread (17) and which at another end is provided with an inner cylindrical surface (14), said female fitting (10) is provided with an end-piece (11) to be coupled to said inner tubular element (2) and defining, at the other end portion thereof, a plurality of ring-like slots (12) each receiving a sealing annular gasket (13) for abutting against and sealing the shell inner cylindrical surface (14) which extends sufficiently away from the inner thread (17) for abutting against the sealing annular gaskets (13) in the plurality of ring-like slots (12).

2. A flexible hose construction, according to Claim 1, characterized in that said inner tubular element (2) is made of a rubber material.

3. A flexible hose construction, according to Claim 2, characterized in that, with said ring-nut (16) being fixed to the fitting, said inner tubular element (2) can freely rotate with respect to said ring-nut (16).

## Patentansprüche

1. Flexible Schlauchkonstruktion (1) für Hydraulikarmaturen und für Fluidkupplungen im allgemeinen, mit einem inneren rohrförmigen Element (2), das auf der Innenseite eines Außenmantels (3) angeordnet, und an einem von dessen Enden an eine feste Patrizenarmatur (4) gekoppelt, und an dessen anderem Ende an eine Matrizenarmatur (10) gekoppelt ist,
**dadurch gekennzeichnet**, daß
die Matrizenarmatur so fluidabgedichtet und angepaßt ist, daß sie sich im Verhältnis zu einer Drehachse des inneren rohrförmigen Elementes (2) dreht, wobei die Matrizenarmatur eine Ringmutter (16) mit einer Hülse (15) aufweist, die an einem Ende mit einem Innengewinde (17) und an einem anderen Ende mit einer inneren zylindrischen Fläche (14) versehen ist, wobei die Matrizenarmatur (10) ein Endstück (11) aufweist, das an das innere rohrförmige Element (2) koppelbar ist und an dessen anderem Endteilstück eine Vielzahl von ringähnlichen Schlitzen (12) vorgesehen sind, aufweist, die jeweils eine abdichtende Ringdichtung (13) aufnehmen, die gegen die innere zylindrische Fläche (14) der Hülse abdichtend anliegt, die sich ausreichend von dem Innengewinde (17) hinweg erstreckt, um gegen die abdichtenden Ringdichtungen (13) in der Vielzahl von ringähnlichen Schlitzen (12) anzuliegen.

2. Flexible Schlauchkonstruktion nach Anspruch 1,
**dadurch gekennzeichnet**, daß
das innere rohrförmige Element (2) aus einem Gummimaterial besteht.

3. Flexible Schlauchkonstruktion nach Anspruch 2,
**dadurch gekennzeichnet**, daß
die Ringmutter (16) so an der Armatur befestigt ist, daß das innere rohrförmige Element (2) im Verhältnis zur Ringmutter (16) frei bewegbar ist.

## Revendications

1. Construction ou assemblage de type tuyau flexible (1 ) pour des raccords hydrauliques et des connexions («couplings») pour fluides en général, comprenant un élément tubulaire interne (2), disposé à l'intérieur d'une gaine externe (3) et raccordé, à l'une des extrémités de ladite gaine à un raccord mâle fixe (4) et, à l'autre des extrémités de ladite gaine, à un raccord femelle (10), caractérisé en ce que ledit raccord femelle est rendu étanche aux fluides et adapté pour tourner par rapport à un axe de rotation dudit élément tubulaire interne (2), ledit raccord femelle comprenant un écrou annulaire (16) («ring-nut») présentant une coque ou enveloppe (15) munie à l'une de ses extrémités d'un filetage interne (17) et à l'autre de ses extrémités d'une surface cylindrique interne (14), ledit raccord femelle (10) étant pourvu d'un embout (11) destiné à être raccordé audit élément tubulaire interne (2) et définissant, à l'autre extrémité dudit embout, plusieurs rainures annulaires en forme de gorges (12) («ring-like slots») chacune recevant un joint annulaire d'étanchéité (13) pour appuyer contre, et rendre étanche, la surface cylindrique interne (14) qui s'étend sur une longueur suffisamment grande au-delà du filetage interne (17) pour s'appuyer contre les joints annulaires d'étanchéité (13) dans plusieurs rainures annulaires en forme de gorges (12).

2. Construction ou assemblage de type tuyau flexible, selon la revendication 1, caractérisé en ce que ledit élément tubulaire interne (2) est constitué d'un matériau de type caoutchouc.

3. Construction ou assemblage de type tuyau flexible selon la revendication 2, caractérisé en ce que ledit écrou annulaire (16) étant fixé au raccord, ledit élément tubulaire interne (2) peut tourner librement par rapport audit écrou annulaire (16).
